# EUROPEAN PATENT APPLICATION

(11) **EP 1 746 359 A2**
(43) Date of publication of application: **24.01.2007**
(21) Application number: 06380202.9
(22) Date of filing: 17.07.2006
(51) Int. Cl.: F24F 13/22, F25D 21/14

(54) **Evaporation device for air conditioning systems**

(30) Priority: 19.07.2005 ES 200501755; 31.10.2005 ES 200502644
(71) Applicant: Ballesteros Avellaneda, Gerardo, 46530 Pucol (Valencia) (ES)
(72) Inventor: Ballesteros Avellaneda, Gerardo, 46530 Pucol (Valencia) (ES)
(74) Representative: Canadell-Isern, Roberto

(57) **Abstract**

This device consists of a recipient (1) connected to the air conditioning equipment, where the water given off by this equipment when it is in operation is conveyed and which contains a detector (2) to detect a certain level of the water inside the recipient, at which point a resistance (3) is triggered that evaporates the water by heat; the vapor is then released to the outside by free exhaust or discharged by a small fan.

## Description

### SUBJECT

The subject to which the invention protected in this Patent refers consists of an "Evaporation device for air conditioning systems".

### BACKGROUND

In the summer months, with the arrival of the summer heat, air conditioning units operate at full capacity. Capable of transforming the hot air in a room into a cool atmosphere, these units become indispensable. Installing an air conditioning unit in a house or an office appears to be obligatory in those places where the heat becomes unbearable.

With regard to the functioning of air conditioning, the conventional system predominates and consists of two units - an interior and an exterior. These two units are linked by a circuit, which contains a coolant liquid. While the coolant evaporates in the interior because it absorbs the heat, the exterior unit re-converts the coolant into liquid and ejects the hot air. Therefore, thanks to the coolant, cold air is produced inside the house and the heat is expelled from the home.

As a consequence of the exterior unit re-converting the coolant into liquid, it becomes necessary to install some type of recipient to collect this, taking care to empty it every so often before it overflows.

### DESCRIPTION OF THE INVENTION

The purpose of the invention that constitutes the subject of this Patent consists of the elimination of the inherent disadvantage in the previously described known subject, having been conceived and developed to attend to this priority objective.

The evaporator for air conditioning consists of a recipient connected to the air conditioning system, which receives the water this unit releases when it is operating, and the water is detected at a determined level inside the recipient by means of a detector that activates a resistance and evaporates the water with heat, the water escaping freely to the exterior or being expelled by a small fan.

There also exists the option of using alternative devices, the purpose of which is to impede excessive electrical consumption by this device, in such a way that it replaces the resistance located inside the recipient with any of the alternative systems that achieve the same purpose. In other words, to eliminate or disperse the water released by air conditioning systems to the air in the atmosphere.

For this purpose, the alternative devices that replace the resistance that causes the water to evaporate through heat may be any of the following:
- An electronic circuit that generates an electrical signal to excite an ultrasonic transducer, which transforms the water into very fine particles, i.e. it converts the water into mist and expels it to the outside.
- An electronic circuit that generates an electrical signal to activate a pump. The electrical signal causes an increase in the pressure of the pump so that the water exits pulverised by nozzles.
- An electronic circuit which puts into operation a motor which has a grooved disc that rotates at high speed and micronises the water and expels it to the outside.
- An electronic circuit that generates an electric signal to activate a fan, which causes the air to pass through a section of porous material and forces it to the outside.

Although four alternative systems have been described to evaporate the water, this list should not be considered to be limiting, since any similar way of achieving the evaporation of the water should be included in the main idea previously described and the subject of this invention patent.

In this way, this system with any of the previously described alternatives achieves the avoidance of having to collect the water in a recipient, with the resulting necessity to empty it every so often. Further, locating this system inside the home avoids the dryness of the air produced by conventional air conditioning systems. Finally, it should be highlighted that it makes the installation of air conditioning systems cheaper and simpler in cases where, instead of the water being collected in a recipient, the option to remove it through a drain is chosen.

### BRIEF DESCRIPTION OF THE DRAWINGS

To complement the description of the invention and facilitate interpretation of the structural characteristics of its subject, drawings are enclosed which show a preferred implementation of the "Evaporation device for air conditioning units" which constitutes the subject of this Patent. In this drawing:

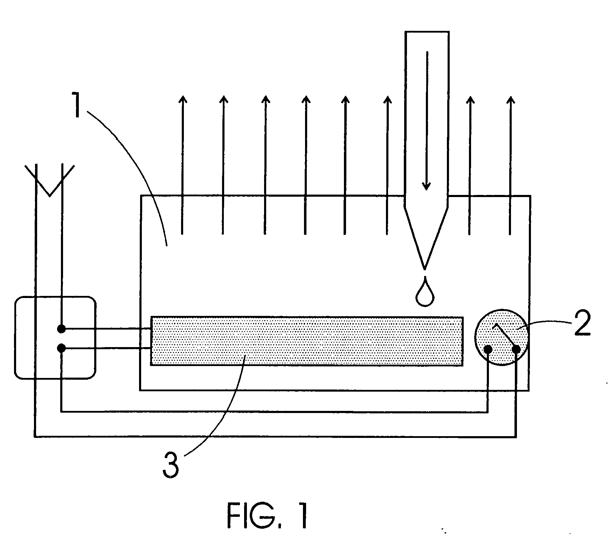

- Figure 1 represents a front elevation of the evaporation device for air conditioning systems.

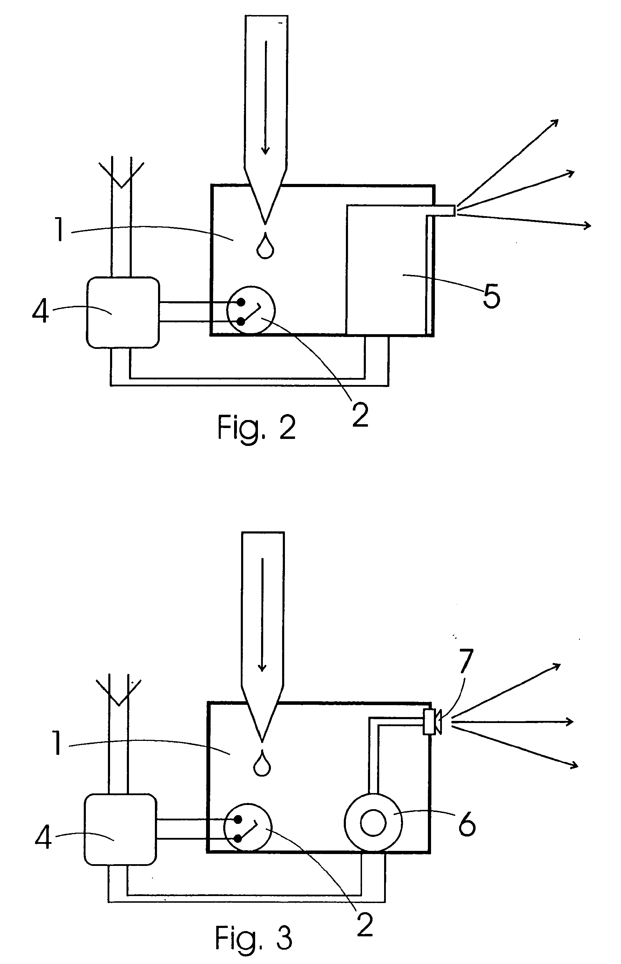

- Figure 2 represents a schematic front elevation of the evaporation device for air conditioning system in which the ultrasonic misting system is employed.
- Figure 3 shows a schematic front elevation of the evaporation device for air conditioning systems, in which the pulverisation system is employed.

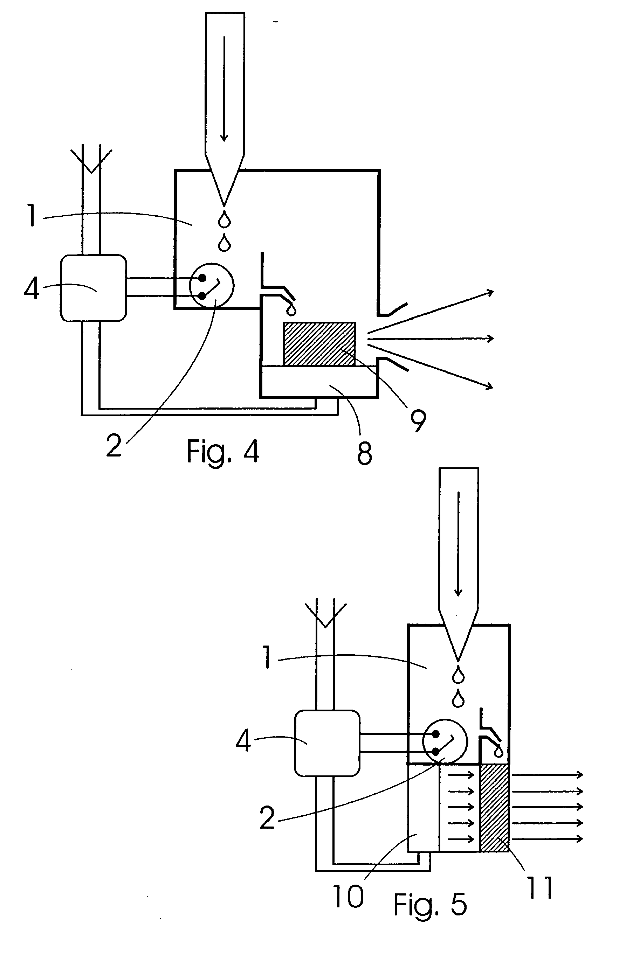

- Figure 4 illustrates a schematic front elevation of the evaporation device for air conditioning systems, in which the mechanical micronisation system is employed.
- Figure 5 represents a schematic front elevation of the evaporation device for air conditioning systems, in which the evaporation by forced air system is employed.

### DESCRIPTION OF A PREFERRED IMPLEMENTATION

In order to clearly show the nature and scope of the advantageous invention of the "Evaporation device for air conditioning units" which constitutes the subject of the claimed invention, its structure is described below, making reference to the drawings which, as they represent a preferred implementation of this subject, for information purposes, must be considered in their widest sense and not as limiters to the application and the content of the claimed invention.

The evaporator for air conditioning consists of a recipient (1) connected to the air conditioning system, which receives the water released by this system when it is operating, which is detected at a determined level inside the recipient by means of a detector (2) which activates a resistance (3) using heat to evaporate the water, which then exits by free escape or is expelled by a small fan.
There also exists the option of using alternative devices, the purpose of which is to impede excessive electrical consumption by this device, in such a way that it replaces the resistance (3) located inside the recipient (1) by any of the alternative systems which achieve the same purpose. In other words, to eliminate or disperse the water released from air conditioning systems to the air in the atmosphere.

For this purpose, the alternative devices that replace the resistance (3) which causes the water to evaporate through heat may be any of the following:
- An electronic circuit (4) which generates an electrical signal to excite an ultrasonic transducer (5), which transforms the water into very fine particles: in other words, it converts the water into mist and expels it to the outside.
- An electronic circuit (4) which generates an electrical signal to activate a pump (6). The electrical signal provokes an increase in pressure in the pump (6) so that the water exits to the outside pulverised by nozzles (7).
- An electronic circuit (4) which puts into operation a motor (8) which has a grooved disc (9), which rotates at high speed and micronises the water and expels it to the outside.
- An electronic circuit (4) which generates an electrical signal to activate a fan (10) which causes the air to pass through a section of porous material and expels it to the outside by force.

## Claims

1. ^{st}- "Evaporation device for air conditioning units" **characterised because** it consists of a recipient (1) connected to the air conditioning unit, which receives the water released by this unit when it is operating, which is detected at a determined level inside the recipient by means of a detector (2) which activates a resistance (3) using heat to evaporate the water, which then exits by free escape or is expelled by a small fan.

2. ^{nd}- "Evaporation device for air conditioning units", according to claim 1, **characterised because** the alternative systems which achieve the same water evaporation effect may operate using an electronic circuit (4) which generates an electrical signal to excite an ultrasonic transducer (5); an electronic circuit (4) which generates an electrical signal to activate a pump (6); an electronic circuit (4) which puts into operation a motor (8) which has a grooved disc (9), which rotates at high speed or an electronic circuit (4) which generates an electrical signal to activate a fan (10).
